# EUROPEAN PATENT SPECIFICATION

(11) **EP 1 234 853 B1**
(45) Date of publication and mention of the grant of the patent: **27.07.2011**
(21) Application number: 02002812.2
(22) Date of filing: 07.02.2002
(51) Int. Cl.: C08L 23/04, C08L 23/10, C08K 7/02

(54) **Resin compositions and molded products making use of the same**
Harzzusammensetzungen und daraus hergestellte Formkörper
Compositions de résine et articles moulés, dérivés de cette composition

(30) Priority: 21.02.2001 JP 2001044624
(43) Date of publication of application: 28.08.2002
(73) Proprietor: Dainichiseika Color & Chemicals Mfg. Co., Ltd., Chuo-ku Tokyo 103-8383 (JP)
(72) Inventor: Yamaguchi, Isamu, Tokyo 103-8383 (JP); Tashiro, Keiji, Tokyo 103-8383 (JP); Yamada, Toshihiro, Tokyo 103-8383 (JP); Kanehara, Junseki, Kanehara Pile Ind. Co., Ltd., Kyoto-shi, Kyoto 601-8354 (JP)
(74) Representative: Wächtershäuser, Günter

(56) References cited:
- EP-A- 1 041 102
- GB-A- 875 133
- PATENT ABSTRACTS OF JAPAN vol. 013, no. 255 (C-606), 13 June 1989 (1989-06-13) & JP 01 056747 A (MITSUBISHI PETROCHEM CO LTD), 3 March 1989 (1989-03-03)

## Description

### BACKGROUND OF THE INVENTION

### a) Field of the Invention

This invention relates to resin compositions each of which, when molded, gives an external appearance resembling nonwoven fabric (hereinafter simply called "nonwoven-fabric-like external appearance" for the sake of brevity) to a surface of the resulting molded product, and more specifically to resin compositions each of which is excellent in weatherability and heat discoloration resistance, has stable mechanical properties and, when molded using molds having fine rugged patterns on surfaces thereof, gives various nonwoven-fabric-like color tones and external appearances, which are rich in warmth and depth, to surfaces of the resulting molded products.

### b) Description of the Related Art

As an interior material for vehicles and buildings, nonwoven fabric has been used widely to date. This nonwoven fabric has an external appearance rich in warmth and depth owing to its structure formed of interlocked fibers. Use of a molded plastic product as an interior material in place of the above-described nonwoven fabric, on the other hand, makes it possible to provide the interior material with a shape and external appearance selected with a rather high degree of freedom and to substantially reduce its cost and, as nonwoven fabric is not used, also makes it possible to overcome various problems associated with use of a glue or the like upon applying nonwoven fabric.

It is, however, not easy to impart a nonwoven-fabric-like external appearance to a surface of a molded plastic product. As resin compositions capable of giving excellent nonwoven-fabric-like external appearances to surfaces of such molded products, a variety of resin compositions with colored short fibers contained therein have been marketed. Except for some applications, however, molded products of these resin compositions have surfaces poor in durability such as heat resistance and weatherability. For this drawback, limitations are imposed on the color tones and external appearances of the surfaces of such molded products so that the molded products are not fully satisfactory in performance for their demand as interior materials for vehicles.

As colored short cellulosic fibers undergo neither melting nor softening and shrinkage even when heated, they are useful as colored short fibers for resin compositions, said colored short fibers being capable of imparting a nonwoven-fabric-like external appearance to a surface of each molded plastic product, but are accompanied by drawbacks to be indicated hereinafter. Described specifically,
(1) Cellulosic fibers themselves are a material poor in heat discoloration resistance, so that the fibers themselves undergo yellowing or browning at a molding temperature as low as 220°C or so. When colored short cellulosic fibers are added to an uncolored resin such as polypropylene and the resulting molding composition is subjected to injection molding, the colored short cellulosic fibers themselves are changed in color tone, thereby imposing a limitation on their applications.
(2) Cellulosic short fibers dyed with general-purpose dyes are not sufficient in both heat discoloration resistance and weatherability. For dyeing cellulosic fibers, reactive dyes are widely used in general. However, these reactive dyes themselves are poor in heat discoloration resistance. Furthermore, the concentration of a dye in a dye bath which is used for dyeing fibers is generally around 5 wt.% based on the fibers. Although the dye can impart a vivid color tone to the fibers, the above-described insufficient heat discoloration resistance of cellulosic fibers themselves cannot be compensated by the color tone of the dye employed for the dyeing. These conventional colored short fibers, therefore, cannot be considered to be equipped with sufficient properties as colored short fibers for a molding resin composition to be used for providing a vehicle interior material or the like with a nonwoven-fabric-like decoration.
(3) A resin composition, which contains colored short cellulosic fibers mass-colored with a pigment, for example in EP1041102 A, colored short viscose rayon fibers, is useful as a resin composition for providing a surface of a molded product with a nonwoven-fabric-like decoration. These colored short fibers are, however, accompanied by problems in production and properties as will be described next. Described specifically, mass-colored short viscose rayon fibers are obtained by adding a pigment to a cellulose solution, spinning the thus-pigmented cellulose solution, and then cutting the resulting colored fibers into short fibers.

However, this process requires complex production steps and is not suited for supplying colored short fibers in small lots, so that it can hardly meet the move toward the ever-increasing diversification in the surface designs of molded plastic products. Moreover, these colored short fibers can hardly have a high color density because the colorant is a pigment. Although the weatherability of the colored short fibers is in a usable range owing to the holding of the pigment between the short fibers, the coloring cannot hide yellowing or browning which takes place due to the insufficient heat discoloration resistance of the short fibers themselves. When such colored short fibers are added to an uncolored resin such as polypropylene and the resulting molding resin composition is subjected to injection molding, the molded product tends to develop discoloration on a surface thereof at a molding temperature of about 240°C. These colored short fibers, therefore, are dissatisfactory as colored short fibers in a resin composition required to afford a molded product having a nonwoven-fabric-like external appearance on a surface thereof, such as a vehicle interior material.

### SUMMARY OF THE INVENTION

An object of the present invention is, therefore, to provide a resin composition which can afford a molded product having excellent heat discoloration resistance, weatherability and mechanical properties while providing the molded product with a nonwoven-fabric-like external appearance on a surface thereof according to claims 1-11.

To achieve the above object, the present inventors have proceeded with extensive research. As a result, it has been found that use of short cellulosic fibers, which have been dyed using a threne dye as a dye at a particular concentration relative to the fibers, in a form mixed in a resin makes it possible to perform stable pelletization of a resin composition (master batch) with the dyed short fibers contained therein and also that molding of the master batch as a resin blend with pellets of a resin free of dyed short fibers (hereinafter simply called "uncolored resin") provides a molded product having an excellent nonwoven-fabric-like external appearance and superb heat discoloration resistance and weatherability, leading to the completion of the present invention.

Accordingly, the present invention provides a resin composition comprising a matrix resin and short cellulosic fibers dyed with at least one threne dye; a molding resin composition comprising the first-mentioned resin composition and an uncolored resin; and a molded product with a surface having a nonwoven-fabric-like external appearance, said molded product having been obtained by molding the molding resin composition. In the subsequent description, a resin composition with dyed short fibers contained at a high concentration will be called "MB", while a mixture of the "MB" and an uncolored resin will be called "molding resin composition".

The MB according to the present invention contains the short cellulosic fibers, which have been dyed at a high density, with the threne dye, in the matrix resin. As the dyed short fibers remain in a state well-dispersed in the matrix resin, these dyed short fibers undergo neither melting nor breakage, for example, even in plasticization of the matrix resin under heat upon production of the MB, thereby permitting stable pelletization of the MB.

The molded product according to the present invention - which has been obtained by blending the MB with the uncolored resin, which may preferably be in the form of pellets, and molding the resultant molding resin composition - is excellent in heat discoloration resistance and good in mechanical and thermal properties, and can be fully qualified for use as a member having a nonwoven-fabric-like external appearance, specifically as a vehicle interior material.

Further, the MB according to the present invention may be blended with pellets of an uncolored resin, and the resulting molding resin composition may be molded using a mold having a fine rugged pattern on a surface thereof. As the dyed short fibers are visible on the surface, the resultant molded product is provided with an external appearance rich in warmth and depth like nonwoven fabric.

The dyed short cellulosic fibers for use in the present invention can be obtained by providing, as a base material, undyed cellulosic fibers in the form of tows, piles, a shredded product, slivers or the like and dyeing the same. Accordingly, they do not require complex steps such as those needed for mass coloration and can be supplied in small lots agreeable with the recent trend toward smaller quantities and differentiation of various products. As a consequence, these dyed short cellulosic fibers make it possible to meet the ever-increasing demand for the shortening of a term until delivery of an MB or molding resin composition.

### DETAILED DESCRIPTION OF THE INVENTION AND PREFERRED EMBODIMENTS

The present invention will hereinafter be described in further detail on the basis of preferred embodiments. The resin compositions (the MB and the molding resin composition) are characterized by the use of the short cellulosic fibers, which have been dyed with the threne dye, as dyed short fibers contained in the compositions.

When fibers are thrown into a solution of a dye, the dye is generally absorbed at a substantial velocity in the fibers so that the concentration of the dye in the solution drops with time and eventually reaches an equilibrium. The amount of the dye absorbed in the fibers at the equilibrium does not vary with temperature, although the time required to reach the equilibrium differs depending upon the temperature. The ability of the fibers to absorb the dye, in other words, the dyeability of the fibers is called "dye affinity". The dye spreads through a water phase and reaches fiber surfaces, and is adsorbed on the fiber surfaces. As time goes on, the dye progressively spreads inwards from the fiber surfaces.

Illustrative of dyes having excellent affinity to cellulosic fibers are reactive dyes, direct dyes, vat dyes, sulfur dyes, and naphthol dyes. It is, however, threne dyes that are useful in the present invention. These threne dyes are vat dyes, which have a polycyclic quinone skeleton, are excellent in various fastness properties, and are also called "indanethrene dyes".

The usefulness of threne dyes in dyeing cellulosic fibers has already been known. Re-interested in the above-described affinity of threne dyes to cellulosic fibers and their excellent fastness properties, the present inventors have found that, when cellulosic fibers are dyed at high density, a molding resin composition with the thus-dyed short fibers contained therein can afford a molded product having an excellent nonwoven-fabric-like external appearance on a surface thereof.

A vat dye having a quinone group is insoluble in water, but becomes water-soluble when it is reduced into a hydroquinone compound (leuco compound) with an alkaline hydrosulfite. In a dye bath of from 40 to 60°C, cellulosic fibers promptly adsorb the leuco compound. When the fibers are taken out of the dye bath and are exposed to air, the dye is re-oxidized into the insoluble quinone in the fibers and is physically retained in the fibers. After the dyeing, soaping treatment is conducted to promote crystallization of the dye in the fibers. As a result, the dyed fibers are provided with a stable color tone and at the same time, the dye simply adhered on the fibers without dyeing them is removed. This dyeing mechanism primarily relies upon van der Waals adsorption, and is different from that of a reactive dye that dyeing is effected by covalent bonding.

The dyeing of cellulosic fibers with a threne dye in the present invention is performed by using the threne dye in an amount of 7 wt.% or more based on the fibers and dyeing the fibers until the equilibrium is reached. More preferably, the amount of the threne dye to be used to dye the fibers may range from 10 to 15 wt.% based on the fibers. If the dye is used in an amount smaller than 7 wt.% based on the fibers, it may be difficult in some instances to compensate the insufficient heat discoloration resistance and weatherability of the fibers themselves by the dyeing with the threne dye. If the dye is used in an amount greater than 15 wt.% based on the fibers, the affinity between the fibers and the threne dye reaches equilibrium, and the above-described compensation by the threne dye is saturated. It is, therefore, uneconomical to use the threne dye in such a great amount. Incidentally, the expression "dye concentration upon dyeing fibers" as used herein does not mean the amount of the dye absorbed in the fibers, but means the amount of the dye used upon dyeing the fibers as calculated based on the fibers. For the sake of brevity, this expression "dye concentration upon dyeing fibers" may hereinafter be referred to simply as "dye concentration".

Threne dyes may be used either singly or in combination in the present invention. Upon dyeing, the fibers may be dyed directly to the above-described density, or may be dyed by repeating dyeing operation of the fibers several times in a low-concentration dye bath such that the fibers eventually have the above-described density. Further, cellulosic fibers may be formed into short fibers after dyeing them in the form of tows or dyeing may be conducted after forming the cellulosic fibers into short fibers, although the latter procedure is more desired. The dyeing of the fibers can be effected in a manner known per se in the art, and no particular limitation is imposed thereon. Examples of such threne dyes can include C.I. Vat Red 10, C.I. Vat Blue 14, C.I. Vat Brown 1, C.I. Vat Orange 2, C.I. Vat Green 1, C.I. Vat Yellow 22, C.I. Vat Violet 1, C.I. Vat Yellow 48, and C.I. Vat Black. One or more of these threne dyes are used to provide the dyed short fibers with a color tone as required.

Illustrative of cellulosic fibers useful in the present invention are natural fibers such as cotton and hemp, chemical fibers such as viscose rayon, lyocell, polynosic and cupprammonium rayon, and semi-synthetic chemical fibers such as cellulose acetate. However, preferred are regenerated fibers, such as viscose rayon, lyocell, polynosic and cupprammonium rayon, and cotton as natural fibers, because they can be readily dyed to high density with threne dyes and, when used in the MB or molding resin composition according to the present invention, the fibers do not undergo softening or melting and remain stable in shape under high heat to which they are exposed during molding, and they permit manufacture of molded products with good reproducibility. Viscose rayon fibers are particularly preferred, because unlike natural fibers such as cotton or hemp, they are available with several different fiber diameters and are uniform in fiber diameter and they can afford various types of dyed short fibers suited for individual applications.

Short viscose rayon fibers, which are preferred for use in the present invention, can be obtained by cutting viscose rayon fibers, which have been obtained from alkali cellulose formed using pulp as a raw material, into short fibers. Short viscose rayon fibers may preferably have a fineness of from 1.1 to 220 decitex, with a fineness of from 1.7 to 5.5 decitex being more preferred. If the fineness is smaller than 1.1 decitex, molding of a molding resin composition according to the present invention may result in a molded product on a surface of which dyed short fibers are not conspicuous, thereby possibly failing to obtain a good nonwoven-fabric-like external appearance. A fineness greater than 220 decitex, on the other hand, leads to an increase in the content of dyed short fibers in a molding resin composition, said dyed short fibers being required for the development of a nonwoven-fabric-like external appearance, thereby impairing the economy. Moreover, the dyed short fibers may be excessively conspicuous on a surface of a molded product, thereby possibly failing to obtain a good nonwoven-fabric-like external appearance on the surface of the molded product.

Incidentally, short cotton fibers, which are another type of preferred cellulosic fibers useful in the present invention, are not available in the form of tows, and can be obtained by dyeing shredded cotton fibers or cotton fibers, which have been formed by cutting bundles of cotton fibers such as cotton slivers, in the above-mentioned manner and then cutting the thus-dyed fibers into short fibers.

The dyed short fibers may preferably have a length of from 0.1 to 3 mm, with a range of from 0.2 to 1 mm being more preferred. If the length of dyed short fibers is shorter than 0.1 mm, it is difficult to control the dyed short fibers in dimension. As a result, the dyed short fibers require higher cutting cost, thereby impairing the economy. Moreover, molding of a molding resin composition according to the present invention may result in a molded product on a surface of which the dyed short fibers are not conspicuous, thereby possibly failing to obtain a nonwoven-fabric-like external appearance. If the length of dyed short fibers is longer than 3 mm, the dispersion of the dyed short fibers into a matrix resin may be hampered in an extrusion pelletization step of a master batch (MB) according to the present invention in which the dyed short fibers are contained, thereby leading to a potential problem in that stable pelletization may be rendered difficult.

The MB according to the present invention can be prepared by mixing short cellulosic fibers, which have been dyed with the above-described threne dye, with a resin which will serve as a matrix. Upon preparation of the MB, one or more additives such as other short fibers (for example, carbon fibers or the like), pigments, antistatic agents, antioxidants, ultraviolet absorbers, flame retardants and dispersants can be mixed as needed. No particular limitations are imposed on the kinds and amounts of these additives. In general, the mixing of the matrix resin with these additives is performed by an extruder, and the MB is formed into pellets.

The dyed short fibers employed in the present invention undergo neither melting nor breakage and retain their original shapes not only during the above-described extrusion and pelletization step but also during a molding step in which the resulting MB (master batch) is blended with an uncolored resin (in the form of pellets) (extending step) and injection molding is performed. The dyed short fibers, therefore, spread evenly in the molding resin composition and molded product according to the present invention, and allow the molded product to present a nonwoven-fabric-like external appearance.

The preferred contents of the matrix resin and dyed short fibers in the MB according to the present invention range from 80 to 95 wt.% and from 5 to 20 wt.%, respectively, with the proviso that the sum of their contents is 100 wt.%. If the content of the dyed short fibers is lower than 5 wt.%, the dyed short fibers may not appear in a sufficient amount on a surface of a molded product obtained by using the MB and an uncolored resin, thereby possibly failing to obtain a good nonwoven-fabric-like external appearance. If the content of the dyed short fibers is higher than 20 wt.%, on the other hand, difficulty may be encountered in performing stable extrusion of strands during a pelletization step upon production of the MB. Moreover, the dyed short fibers may appear in an excessive amount on a surface of a molded product obtained by using the MB and an uncolored resin, thereby conversely rendering the surface unnatural as a nonwoven-fabric-like external appearance.

In the MB according to the present invention, no particular limitation is imposed on the matrix resin. A desired matrix resin can be chosen depending upon the kind of an uncolored resin (which may also be called "an extender resin" and are in the form of pellets) to be blended with the MB upon molding a molded product. When the uncolored resin is polypropylene (PP), for example, the matrix resin in the MB may preferably be a resin blend consisting of 15 to 40 wt.%, preferably 25 to 35 wt.% of polypropylene; 15 to 40 wt.%, preferably 25 to 35 wt.% of polyethylene; 10 to 30 wt.%, preferably 15 to 20 wt.% of an ethylene-propylene elastomer; and 1 to 10 wt.%, preferably 3 to 8 wt.% of acid-modified polypropylene.

If the contents of polypropylene and polyethylene are lower than 15 wt.% in the composition of the MB, the MB may not show sufficient compatibility with the uncolored resin (PP) upon molding. If their contents exceed 40 wt.%, on the other hand, the dyed short fibers may not be sufficiently dispersed upon blending the MB with the uncolored resin. If the content of the ethylene-propylene elastomer (EPR) is lower than 10 wt.%, a molded product produced subsequent to blending of the MB with the uncolored resin may not be provided with sufficient impact strength. If the content of the ethylene-propylene elastomer is higher than 30 wt.%, a molded product produced subsequent to blending of the MB with the uncolored resin may have a lowered heat distortion temperature. If the content of the acid-modified polypropylene is lower than 1 wt.%, it may become difficult to perform stable extrusion of strands during pelletization step upon producing the MB. If the content of the acid-modified polypropylene exceeds 10 wt.%, on the other hand, a molded product produced subsequent to blending of the MB with the uncolored resin may be provided with reduced weatherability.

In the MB according to the present invention, no particular limitation is imposed on polypropylene usable as the matrix resin. Examples of the polypropylene can include isotactic, atactic or syndiotactic propylene homopolymer; ethylene-propylene random copolymers in each of which the content of ethylene units is low; ethylene-propylene block copolymers each of which is composed of homoblock segments formed of propylene homopolymer and copolymer segments formed of an ethylene-propylene random copolymer blocks in each of which the content of ethylene units is relatively high; and crystalline propylene-ethylene-α-olefin copolymers such as the ethylene-propylene copolymers whose homoblock segments or copolymer block segments are further copolymerized with an α-olefin such as butene-1.

In the MB according to the present invention, no particular limitation is imposed on polyethylene usable as the matrix resin. Illustrative are high-density, medium-density and low-density polyethylenes, low-density linear polyethylene, polyethylene of ultra high molecular weight, ethylene-vinyl acetate copolymer, and ethylene-ethyl acrylate copolymer. Examples of ethylene-propylene elastomer can include ethylene-propylene copolymer rubber (EPR) and ethylene-propylene-diene copolymer rubber (EPDM). Examples of the acid-modified polypropylene can include those obtained by modifying polypropylene with unsaturated carboxylic acids or derivatives thereof, specifically acrylic acid, methacrylic acid, maleic acid, fumaric acid, itaconic acid, maleic anhydride, itaconic anhydride, methyl acrylate, methyl methacrylate, ethyl acrylate, monoethyl maleate, acrylamide, maleic acid monoamide, sodium methacrylate and sodium acrylate. Particularly preferred is modified polypropylene obtained by subjecting polypropylene to heat treatment in the presence of maleic anhydride and a radical generator.

Upon producing a molded product, the MB according to the present invention is used as a blend with a resin containing no dyed short fibers, for example, an uncolored resin. No particular limitation is imposed on their blending ratio. In general, however, the uncolored resin is blended in an amount 5 to 50 times by weight, preferably 10 to 30 times by weight as much as the MB. Blending of the uncolored resin in a proportion smaller than 5 times by weight relative to the MB results in a costly molded product, and impairs the economy. In addition, the molded product may be provided at a surface thereof with a dark color tone, leading to a potential problem that the surface may become unnatural as a nonwoven-fabric-like external appearance. Blending of the uncolored resin in a proportion greater than 50 times by weight relative to the MB, on the other hand, may not allow the dyed short fibers to appear in a sufficient amount on a surface of a molded product, resulting in a problem that the molded product may not be provided on the surface thereof with a good nonwoven-fabric-like external appearance.

The short fibers dyed with the threne dye are contained in a state well-dispersed in the MB according to the present invention. Stable pelletization of the composition is, therefore, feasible without causing melting or breakage of the dyed short fibers. On a surface of a molded product obtained by blending the MB of the present invention with an uncolored resin and molding the resultant molding composition while using a mold having a fine rugged pattern on a surface thereof, the dyed short fibers appear, thereby presenting an external appearance rich in warmth and depth like nonwoven fabric. No particular limitation is imposed on the fine rugged pattern on the surface of the molded product, and a variety of patterns can be selectively used depending upon the application. Illustrative are a citron-like, embossed pattern (an embossed decoration with surface configurations resembling the rind of a citrus fruit) and a fine checkered pattern. The molded product obtained from the molding resin composition formed by blending the MB of the present invention with the uncolored resin is excellent in heat discoloration resistance, its surface hue varies little even when exposed to outdoor environment over an extended period of time, and its mechanical properties are good. The molded product can, therefore, be fully qualified for use as a member having a nonwoven-fabric-like external appearance, specifically as a vehicle interior material.

### Examples

The present invention will hereinafter be described more specifically based on Examples and Referential Examples, although the present invention is by no means limited to these Examples. The designations of "part or parts" and "%" in the subsequent description are on a weight basis unless otherwise specifically indicated. The various properties in the following Examples and Referential Examples were determined by the following methods.

### (1) Heat discoloration resistance

In each of the following Examples and Referential Examples, the MB (5 parts), which contained the dyed short fibers, was blended with a propylene-based composite material as an uncolored resin (100 parts; a composite material composed of 65% of polypropylene, 16% of an ethylene-propylene elastomer, talc and other additives, this will hereinafter be applied equally) . Firstly, standard test pieces were prepared with an injection molding machine by setting a molding temperature and an intra-cylinder residence time at 200°C and 0 minute (continuous molding), respectively. Additional test pieces were prepared at molding temperatures of 220°C and 240°C by changing the intra-cylinder residence time to 0 minute (continuous molding), 15 minutes and 30 minutes, respectively. Color differences ΔE between the standard test pieces and the other test pieces were measured by a colorimeter ("SM Color Computer, Model SM-5", trade name; manufactured by SUGA TEST INSTRUMENTS CO., LTD. Each test piece with a ΔE value of 1 or smaller was rated "A" (passed), each test piece with a ΔE value greater than 1.5 was rated "C" (failed), and each test piece with a ΔE value greater than 1 but not greater than 1.5 was rated "B".

### (2) Weatherability

Using a sunshine fadeometer ("FAL-5H Model B", trade name; manufactured by SUGA TEST INSTRUMENTS CO., LTD.), the test pieces obtained above in the test (1) were tested for weatherability at 80°C. Their ΔE values after exposure to light for 400 hours and 1,000 hours were measured [the ΔE values were color differences from the corresponding test pieces before the test and measured by using the same instrument as that employed in the test (1)].

### (3) Mechanical properties and heat distortion temperature

The MB (5 parts) and the polypropylene-based composite material (100 parts) were blended and then injection-molded to produce test pieces. Their tensile strength, elongation at break, flexural strength, modulus in flexure, Izod impact strength and heat distortion temperature were measured following the corresponding ASTM methods. Likewise measured were the above-mentioned physical properties of test pieces made solely of the polypropylene-based composite material as an uncolored resin. The physical properties of the test pieces made of the resin blend were expressed in terms of indexes relative to the values of the corresponding physical properties of the test pieces made solely of the polypropylene-based composite material while assuming that those values were each 100.

### Example 1

Undyed short viscose rayon fibers of 3.3 decitex and 0.5 mm in average length were produced. Portions of those short fibers were separately dyed to equilibrium in a manner known *per se* in the art by using C.I. Vat Red 10 in such amounts that the dye amounted to 7%, 10%, 13% and 15 %, respectively, based on the corresponding portions of the short fibers (hereinafter called "dye concentrations"). Dyed short viscose rayon fiber samples were obtained accordingly.

Mixed in a tumbler were polypropylene (28.3 parts), linear low-density polyethylene (28.3 parts), an ethylene-propylene elastomer ("TAFMER A=4085", trade name; product of Mitsui Petrochemical Industries, Ltd.; 20.0 parts), a maleic-anhydride-modified product of polypropylene ("POLYBOND 3150", trade name; product of Shiraishi Calcium Kaisha, Ltd.; 3.0 parts), the dyed short fiber sample obtained using the dye at 7% dye concentration (12.0 parts), a white pigment (6.3 parts) as an added color, a dispersant of the metal stearate soap type (1.7 parts), an antistatic agent of the stearic monoglyceride type (0.3 part), and an antioxidant of the hydroxyphenyl propionate type (0.1 part). The thus-obtained molding resin composition was extruded into strands by an extruder. Using a pelletizer, the strands were pelletized to obtain an MB (MB 1-1) according to the present invention which contained the dyed short fiber sample. In a similar manner, MBs (MB 1-2, MB 1-3, MB 1-4) according to the present invention were also obtained using the dyed short fiber samples which had been obtained using the dye at 10%, 13% and 15% dye concentrations, respectively. Upon preparation of each MB, the extrusion into strands was stable, and the pelletization was successfully performed without problems.

MB 1-1 (5 parts) and the polypropylene-based composite material (100 parts) were blended. Using a mold provided at a surface thereof with a citron-like, embossed pattern, the resultant resin blend was subjected to injection molding to obtain test pieces. In a similar manner, MB 1-2, MB 1-3 and MB 1-4 were separately molded into test pieces. A surface of each test piece so obtained, said surface having been provided with a citron-like, embossed pattern, contained dyed short fibers of a red color distributed in a fine rugged surface of a white color, and presented an external appearance having similar warmth and depth as nonwoven fabric. Those test pieces were tested for heat discoloration resistance, and their color differences ΔE were determined by the above-mentioned method. Incidentally, used as the white pigment, that is, the added color was a toned pigment prepared by adding red iron oxide, a calcined yellow pigment and carbon black to titanium oxide. Various properties of the test pieces, which were made of the resin blends, respectively, and those of test pieces made solely of the polypropylene-based composite material were determined by the above-described methods. The results of those measurements are shown in Table 1.

As a result, the test pieces obtained using the MBs according to the present invention (MB 1-1, MB 1-2, MB 1-3, MB 1-4) - which contained the dyed short fibers obtained using the dye at dye concentrations of 7% and higher, especially at dye concentrations higher than 10% - showed excellent heat discoloration resistance and weatherability. Therefore, molding resin compositions according to the present invention have been ascertained to be useful as molding resin compositions each of which, when molded into a vehicle interior material, - provides the molded product with a nonwoven-fabric-like external appearance on a surface thereof. Incidentally, mechanical properties of a test piece are irrelevant to the dye concentration used upon dyeing short fibers, and are governed by the dimensions (fineness and length) of short viscose rayon fibers employed as a raw material and the content of the short fibers in the molding resin composition. The thus-obtained test pieces were also tested for migration resistance. No color migration was observed.

### Referential Example 1

In a similar manner as in Example 1 except that short viscose rayon fiber samples were dyed using the dye at dye concentrations of 3% and 5%, respectively, two types of MBs (MB 1'-1, MB 1'-2) were obtained. MB 1'-1 was mixed with the polypropylene-based composite material, followed by the molding of test pieces in a similar manner as in Example 1. In a similar manner, test pieces were molded using MB 1'-2. Various properties of those test pieces were measured. The results of those measurements are also shown in Table 1.

**Table 1**

| Ranked properties | | | Dye concentration upon dyeing (%) | | | | | |
|---|---|---|---|---|---|---|---|---|
| | | | Example 1 | | | | Ref. Ex. 1 | |
| | | | 7 | 10 | 13 | 15 | 3 | 5 |
| Heat discoloration resistance | 220°C | 0 min | A | A | A | A | A | A |
| | | 15 min | A | A | A | A | A | A |
| | | 30 min | A | A | A | A | B | B |
| | 240°C | 0 min | A | A | A | A | A | A |
| | | 15 min | A | A | A | A | C | B |
| | | 30 min | B | B | A | A | C | C |
| Weatherability | ΔE | 400 hr | 0.85 | 0.65 | 0.48 | 0.47 | 1.75 | 1.25 |
| | | 1000hr | 1.20 | 0.80 | 0.60 | 0.60 | 3.45 | 1.45 |
| Mechanical property* | Tensile strength | | 98 | 96 | 96 | 98 | 98 | 95 |
| | Elongation | | 100 | 100 | 100 | 100 | 100 | 100 |
| | Flexural strength | | 94 | 94 | 92 | 92 | 95 | 94 |
| | Modulus in flexure | | 95 | 96 | 94 | 92 | 95 | 93 |
| | Izod impact strength | | 85 | 82 | 82 | 80 | 85 | 85 |
| | Heat distortion temperature | | 94 | 92 | 82 | 90 | 92 | 93 |

| | | | | | | | | |
|---|---|---|---|---|---|---|---|---|
| * Expressed in terms of indexes relative to the values of the corresponding mechanical properties of the test pieces made solely of the polypropylene-based composite material while assuming that those values were each 100. | | | | | | | | |

As is envisaged from Table 1, the test pieces of Example 1 - which had been molded using the MBs (MB 1-1, MB 1-2, MB 1-3, MB 1-4) with the dyed short fiber samples contained therein, respectively - showed excellent heat discoloration resistance and weatherability, and compared with the test pieces of Referential Example 1, were clearly observed to have significant differences. The test pieces, which had been molded using the MB (MB 1-4) with the short fiber sample dyed using the dye at 15% dye concentration, were not observed to have significant differences compared with the test pieces molded using the MB (MB 1-3) with the short fiber sample dyed using the dye at 13% dye concentration. Compared with the test pieces made solely of the polypropylene-base composite material, the mechanical properties of each test piece were not observed to be lowered substantially. Therefore, molding resin compositions according to the present invention have been ascertained to fall within a range usable as molding resin compositions for vehicle interior materials.

### Example 2

In a similar manner as in Example 1 except that C.I. Vat Blue 14 was used as a dye, MBs with the short fiber samples dyed using the dye at 7%, 10%, 13% and 15% dye concentrations (MB 2-1, MB 2-2, MB 2-3, MB 2-4), respectively, were obtained. In a similar manner as in Example 1, test pieces were molded using MB 2-1 and their surface conditions, heat discoloration resistance and weatherability were measured. Likewise, test pieces were molded by separately using MB 2-2, MB 2-3 and MB 2-4, and their surface conditions, heat discoloration resistance and weatherability were measured. A surface of each test piece so obtained, said surface having been provided with a citron-like, embossed pattern, contained dyed short fibers of a blue color distributed in a fine rugged surface of a white color, and presented an external appearance having similar warmth and depth as nonwoven fabric. Those test pieces were tested for heat discoloration resistance, and their color differences ΔE were determined by the above-mentioned method. The results of those measurements are shown in Table 2.

### Referential Example 2

In a similar manner as in Example 2 except that short viscose rayon fiber samples were dyed at dye concentrations of 3% and 5%, respectively, two types of MBs containing those dyed short fibers, respectively, and test pieces made using those MBs were obtained. In a similar manner as in Example 1, various properties of the individual test pieces were measured. The results of those measurements are also shown in Table 2. The results so obtained were similar to those obtained in Referential Example 1.

**Table 2**

| Ranked properties | | | Dye concentration upon dyeing (%) | | | | | |
|---|---|---|---|---|---|---|---|---|
| | | | Example 2 | | | | Ref. Ex. 2 | |
| | | | 7 | 10 | 13 | 15 | 3 | 5 |
| Heat discoloration resistance | 220°C | 0 min | A | A | A | A | A | A |
| | | 15 min | A | A | A | A | A | B |
| | | 30 min | B | A | A | A | B | B |
| | 240°C | 0 min | A | A | A | A | A | A |
| | | 15 min | B | B | A | A | C | C |
| | | 30 min | B | B | A | A | C | C |
| Weatherability | ΔE | 400 hr | 0.86 | 0.72 | 0.65 | 0.62 | 1.85 | 1.15 |
| | | 1000 hr | 1.35 | 0.95 | 0.80 | 0.81 | 3.55 | 1.65 |

### Example 3

Dyed short viscose rayon fiber samples (a) to (d) of a brown color were obtained in a similar manner as in Example 1 except for the use of threne dye mixtures obtained by combining three threne dyes in the proportions shown in Table 3.

**Table 3**

| Threne dye | (a) | (b) | (c) | (d) |
|---|---|---|---|---|
| Vat Brown 1 | 57.1% | 58% | 57.7% | 58% |
| Vat Blue 14 | 4.3% | 4% | 3.8% | 4% |
| Vat Orange 2 | 38.6% | 38% | 38.5% | 38% |
| Dye concentration upon dyeing (%) | 7 | 10 | 13 | 15 |

Mixed in a tumbler were polypropylene (28.8 parts), linear low-density polyethylene (28.8 parts), an ethylene-propylene elastomer (the same elastomer as that used in Example 1; 20.0 parts), a maleic-anhydride-modified product of polypropylene (the same modified product as that used in Example 1; 3.0 parts), the dyed short fiber sample (a) (12.0 parts), an ivory pigment (5.6 parts) as an added color, a dispersant (the same dispersant as that used in Example 1; 1.4 parts), an antistatic agent (the same antistatic agent as that used in Example 1; 0.3 part), and an antioxidant (the same antioxidant as that used in Example 1; 0.1 part) . The thus-obtained molding resin composition was extruded into strands by an extruder. Using a pelletizer, the strands were pelletized to obtain an MB (MB 3-1) according to the present invention. In a similar manner, MBs (MB 3-2, MB 3-3, MB 3-4) according to the present invention were also obtained using the dyed short fiber samples (b),(c) and (d), respectively. Upon preparation of each MB, stable extrusion and pelletization were successfully performed.

MB 3-1 (5 parts) and the polypropylene-based composite material (100 parts) were blended. Using a mold provided at a surface thereof with a citron-like, embossed pattern, the resultant resin blend was subjected to injection molding to obtain test pieces. In a similar manner, MB 3-2, MB 3-3 and MB 3-4 were separately molded into test pieces. A surface of each test piece so obtained, said surface having been provided with a citron-like, embossed pattern, contained dyed short fibers of a brown color distributed in a fine rugged surface of an ivory color, and presented an external appearance having similar warmth and depth as nonwoven fabric. Those test pieces were tested for heat discoloration resistance, and their color differences ΔE were determined by the above-mentioned method. Further, various properties of those test pieces were also determined in a similar manner as in Example 1. The results of those measurements are shown in Table 4.

As a result, the test pieces obtained using the MBs according to the present invention (MB 3-1, MB 3-2, MB 3-3, MB 3-4) - which contained the short fibers dyed using the dye at dye concentrations of 7% and higher, especially of dye concentrations higher than 10% - showed good results in heat discoloration resistance. Therefore, molding resin compositions according to the present invention have been ascertained to be useful as molding resin compositions each of which provides a vehicle interior material with a nonwoven-fabric-like external appearance.

### Referential Example 3

In a similar manner as in Example 3 except that short viscose rayon fiber samples dyed at dye concentrations of 3% and 5%, respectively, two types of MBs (MB 3'-1,MB 3'-2) containing those dyed short fiber samples, respectively, and test pieces made using those MBs were obtained. In a similar manner as in Example 3, various properties of the individual test pieces were measured. The results of those measurements are also shown in Table 4. Concerning the mechanical properties of those test pieces, the measurement results were similar to those obtained in Referential Example 1.

**Table 4**

| Ranked properties | | | Dye concentration upon dyeing (%) | | | | | |
|---|---|---|---|---|---|---|---|---|
| | | | Example 3 | | | | Ref. Ex. 3 | |
| | | | 7 | 10 | 13 | 15 | 3 | 5 |
| Heat discoloration resistance | 220°C | 0 min | A | A | A | A | A | A |
| | | 15 min | A | A | A | A | A | A |
| | | 30 min | A | A | A | A | B | B |
| | 240°C | 0 min | A | A | A | A | A | A |
| | | 15 min | A | A | A | A | C | C |
| | | 30 min | B | A | A | A | C | C |
| Weatherability | ΔE | 400 hr | 0.75 | 0.65 | 0.48 | 0.45 | 1.82 | 1.15 |
| | | 1000 hr | 1.15 | 0.82 | 0.62 | 0.60 | 3.25 | 1.36 |
| Mechanical property* | Tensile strength | | 96 | 95 | 95 | 92 | 95 | 95 |
| | Elongation | | 98 | 98 | 95 | 95 | 100 | 100 |
| | Flexural strength | | 92 | 92 | 92 | 90 | 92 | 92 |
| | Modulus in flexure | | 94 | 92 | 96 | 90 | 95 | 95 |
| | Izod impact strength | | 84 | 82 | 82 | 80 | 86 | 85 |
| | Heat distortion temperature | | 92 | 92 | 90 | 90 | 92 | 92 |

| | | | | | | | | |
|---|---|---|---|---|---|---|---|---|
| * Expressed in terms of indexes relative to the values of the corresponding mechanical properties of the test pieces made solely of the polypropylene-based composite material while assuming that those values were each 100. | | | | | | | | |

The results of Table 4, like Table 1 and Table 2, also indicate that use of an MB, which contains short fibers dyed at a dye concentration of 10% or higher, gives good properties. Therefore, molding resin compositions according to the present invention have been ascertained to be useful as molding resin compositions for vehicle interior materials.

### Example 4

In a similar manner as in Example 1 except that short cotton fibers were used as short fibers, MBs (MB 4-1, MB 4-2, MB 4-3, MB 4-4) containing short cotton fiber samples dyed at dye concentrations of 7%, 10%, 13% and 15%, respectively, and test pieces made using those MBs were obtained, respectively. In a similar manner as in Example 1, various properties of the individual test pieces were measured. The results of those measurements are shown in Table 5.

As a result, the test pieces molded using the MBs according to the present invention (MB 4-1, MB 4-2, MB 4-3, MB 4-4) - which contained the short cotton fiber samples dyed at dye concentrations of 7% and higher, especially dye concentrations higher than 10% - showed excellent heat discoloration resistance and weatherability. Therefore, molding resin compositions according to the present invention have been ascertained to be useful as molding resin compositions each of which, when molded into a vehicle interior material, provides the molded product with a sufficient nonwoven-fabric-like external appearance on a surface thereof.

Incidentally, mechanical properties of a test piece are irrelevant to the dye concentration used upon dyeing short cotton fibers, and are governed by the dimensions (fineness and length) of short cotton fibers employed as a raw material and the content of the short cotton fibers in the molding resin composition. The thus-obtained test pieces were also tested for migration resistance. No color migration was observed.

### Referential Example 4

In a similar manner as in Referential Example 1 except for the use of short cotton fibers as short fibers, MBs containing short cotton fiber samples dyed at dye concentrations of 3% and 5%, respectively, and test pieces made using those MBs were obtained, respectively. In a similar manner as in Example 1, various properties of the individual test pieces were measured. The results of those measurements are shown in Table 5.

**Table 5**

| Ranked properties | | | Dye concentration upon dyeing (%) | | | | | |
|---|---|---|---|---|---|---|---|---|
| | | | Example 4 | | | | Ref. Ex. 4 | |
| | | | 7 | 10 | 13 | 15 | 3 | 5 |
| Heat discoloration resistance | 220°C | 0 min | A | A | A | A | A | A |
| | | 15 min | A | A | A | A | B | B |
| | | 30 min | B | A | A | A | B | B |
| | 240°C | 0 min | A | A | A | A | B | B |
| | | 15 min | B | A | A | A | C | C |
| | | 30 min | B | A | A | A | C | C |
| Weatherability | ΔE | 400 hr | 1.10 | 0.75 | 0.60 | 0.55 | 2.05 | 1.85 |
| | | 1000 hr | 1.85 | 1.00 | 0.65 | 0.60 | 5.00 | 3.10 |
| Mechanical property* | Tensile strength | | 96 | 95 | 95 | 94 | 94 | 95 |
| | Elongation | | 100 | 100 | 100 | 100 | 100 | 100 |
| | Flexural strength | | 94 | 93 | 92 | 93 | 93 | 92 |
| | Modulus in flexure | | 95 | 94 | 94 | 92 | 95 | 94 |
| | Izod impact strength | | 88 | 87 | 88 | 89 | 90 | 90 |
| | Heat distortion temperature | | 93 | 93 | 92 | 91 | 93 | 93 |

| | | | | | | | | |
|---|---|---|---|---|---|---|---|---|
| * Expressed in terms of indexes relative to the values of the corresponding mechanical properties of the test pieces made solely of the polypropylene-based composite material while assuming that those values were each 100. | | | | | | | | |

As is envisaged from Table 5, the test pieces of Example 4 - which had been molded using the MBs (MB 4-1, MB 4-2, MB 4-3, MB 4-4) with the dyed short cotton fiber samples contained therein, respectively - showed excellent heat discoloration resistance and weatherability, and compared with the test pieces of Referential Example 4, were clearly observed to have significant differences. The test pieces, which had been molded using the MB (MB 4-4) with the short cotton fiber sample dyed at 15% dye concentration, were not observed to have significant differences compared with the test pieces molded using the MB (MB 4-3) with the dyed short cotton fiber sample dyed at 13% dye concentration. Compared with the test pieces made solely of the polypropylene-base composite material, the mechanical properties of each test piece were not observed to be lowered substantially. Therefore, molding resin compositions according to the present invention have been ascertained to fall within a range usable as molding resin compositions for vehicle interior materials.

## Claims

1. A process for producing a weather resistant and heat discoloration resistant molded product with a surface having an external appearance resembling nonwoven fabric, which process comprises the following steps:
(a) vat-dyeing short cellulosic fibers with at least one threne dye in an amount of at least 7 wt.% based on said short cellulosic fibers for providing short cellulosic fibers dyed with at least one threne dye;
(b) mixing a resin with said short cellulosic fibers dyed with at least one threne dye for providing a resin composition comprising 80 to 95 wt.% of said resin as a matrix resin and 5 to 20 wt.% of said short cellulosic fibers dyed with at least one threne dye;
(c) blending said resin composition with an uncolored resin free of dyed short cellulosic fibers in order to obtain a molding resin composition; and
(d) molding said molding resin composition for obtaining said molded product.

2. A resin composition for use in the process of claim 1, which comprises
(i) 80 to 95 wt.% of a matrix resin and
(ii) 5 to 20 wt.% of short cellulosic fibers vat-dyed with at least one threne dye in an amount of at least 7 wt.% based on said short cellulosic fibers.

3. A resin composition according to claim 2, wherein said short cellulosic fibers are selected from the group consisting of short viscose rayon fibers and short cotton fibers.

4. A resin composition according to claim 2 or 3, wherein said short cellulosic fibers have a fineness of from 1.1 to 220 dtex (decitex) and a length of from 0.1 to 3 mm.

5. A resin composition according to any one of claims 2 to 4, wherein said matrix resin comprises 15 to 40 wt.% of polypropylene, 15 to 40 wt.% of polyethylene, 10 to 30 wt.% of an ethylene-propylene elastomer, and 1 to 10 wt.% of acid-modified polypropylene.

6. A resin composition according to any one of claims 2 to 5, wherein said threne dye is selected from the group consisting of C.I. Vat Red 10, C.I. Vat Blue 14, C.I. Vat Brown 1, C.I. Vat Orange 2, C.I. Vat Green 1, C.I. Vat Yellow 22, C.I. Vat Violet 1, C.I. Vat Yellow 48 and C.I. Vat Black.

7. A resin composition according to any one of claims 2 to 6, wherein said short cellulosic fibers are vat-dyed by using said threne dye in an amount of from 7 to 15 wt.% based on said short cellulosic fibers.

8. The use of a resin composition according to any of claims 2-7 as a master batch.

9. A molding resin composition for use in the process of claim 1, which comprises
(A) a resin composition according to any one of claims 2 to 8 and
(B) an uncolored resin free of dyed short cellulosic fibers.

10. A molding resin composition according to claim 9, wherein said uncolored resin is polypropylene.

11. A molded product with a surface having an external appearance resembling nonwoven fabric, said molded product obtainable by the process according to claim 1.

## Patentansprüche

1. Verfahren zur Herstellung eines wetterfesten und in der Wärme farbbeständigen geformten Produkts dessen Oberfläche den Eindruck eines Vliesstoffes vermittelt, wobei das Verfahren die folgenden Schritte umfasst:
(a) Küpenfärben von kurzen Zellulosefasern mit mindestens einem Thren-Farbstoff in einer Menge von mindestens 7 Gewichts-%, bezogen auf die kurzen Zellulosefasern, zur Bereitstellung kurzer Zellulosefasern, die mit mindesten einem Thren-Farbstoff gefärbt sind;
(b) Vermischen eines Harzes mit den kurzen Zellulosefasern, die mit dem mindestens einen Thren-Farbstoff gefärbt sind, zur Bereitstellung einer Harzzusammensetzung, umfassend 80 bis 95 Gewichts-% des Harzes als Matrixharz und 5 bis 20 Gewichts-% der kurzen Zellulosefasern, die mit dem mindestens einen Thren-Farbstoff gefärbt sind;
(c) Vermischen der Harzzusammensetzung mit einem ungefärbten Harz, das frei von gefärbten kurzen Zellulosefasern ist, um eine Harzformmasse zu erhalten; und
(d) Formen der Harzformmasse, zur Schaffung des geformten Produkts.

2. Harzzusammensetzung zur Verwendung im Verfahren nach Anspruch 1, die umfasst
(i) 80 bis 95 Gewichts-% eines Matrixharzes und
(ii) 5 bis 20 Gewichts-% kurze Zellulosefasern, die küpengefärbt sind mit mindestens einem Thren-Farbstoff in einer Menge von mindestens 7 Gewichts-% bezogen auf die kurzen Zellulosefasern.

3. Harzzusammensetzung nach Anspruch 2, wobei die kurzen Zellulosefasern ausgewählt sind aus der Gruppe, bestehend aus kurzen Viskose-Rayonfasern und kurzen Baumwollfasern.

4. Die Harzzusammensetzung nach Anspruch 2 oder 3, wobei die kurzen Zellulosefasern eine Feinheit von 1,1 bis 220 dtex (Dezitex) aufweisen, sowie eine Länge von 0,1 bis 3 mm.

5. Harzzusammensetzung nach einem der Ansprüche 2 bis 4, wobei das Matrixharz 15 bis 40 Gewichts-% Polypropylen, 15 bis 40 Gewichts-% Polyethylen, 10 bis 30 Gewichts-% eines Ethylen-Propylen-Elastomers und 1 bis 10 Gewichts-% eines säuremodifizierten Polypropylens umfasst.

6. Die Harzzusammensetzung nach einem der Ansprüche 2 bis 5, wobei der Thren-Farbstoff ausgewählt wird aus der Gruppe, bestehend aus C.I. Vat Red 10, C.I. Vat Blue 14, C.I. Vat Brown 1, C.I. Vat Orange 2, C.I. Vat Green 1, C.I. Vat Yellow 22, C.I. Vat Violet 1, C.I. Vat Yellow 48 und C.I. Vat Black.

7. Die Harzzusammensetzung nach einem der Ansprüche 2 bis 6, wobei die kurzen Zellulosefasern küpengefärbt sind, unter Verwendung des Thren-Farbstoffs in einer Menge von 7 bis 15 Gewichts-% bezogen auf die kurzen Zellulosefasern.

8. Die Verwendung einer Harzzusammensetzung nach einem der Ansprüche 2 bis 7 als Masterbatch.

9. Harzformmasse zur Verwendung in dem Verfahren nach Anspruch 1, die umfasst
(A) eine Harzzusammensetzung nach einem der Ansprüche 2 bis 8 und
(B) ein ungefärbtes Harz, das frei ist von gefärbten kurzen Zellulosefasern.

10. Harzformmasse nach Anspruch 9, wobei das ungefärbte Harz Polypropylen ist.

11. Geformtes Produkt dessen Oberfläche den Eindruck eines Vliesstoffes vermittelt, wobei das geformte Produkt erhältlich ist durch das Verfahren nach Anspruch 1.

## Revendications

1. Procédé destiné à produire un produit moulé résistant aux intempéries et résistant à la décoloration par la chaleur, dont une surface présente un aspect extérieur analogue à un non-tissé, lequel procédé comprend les étapes suivantes consistant à :
(a) teinter au colorant de cuve des fibres cellulosiques courtes avec au moins un colorant à base de thrène dans une quantité d'au moins 7 % en poids basée sur lesdites fibres cellulosiques courtes pour donner des fibres cellulosiques courtes teintées avec au moins un colorant à base de thrène ;
(b) mélanger une résine avec lesdites fibres cellulosiques courtes teintées avec au moins un colorant à base de thrène pour donner une composition de résine comprenant de 80 à 95 % en poids de ladite résine en tant que résine de matrice et 5 à 20 % en poids desdites fibres cellulosiques courtes teintées avec au moins un colorant à base de thrène ;
(c) mélanger ladite composition de résine avec une résine non colorée exempte de fibres cellulosiques courtes teintées afin d'obtenir une composition de résine de moulage ; et
(d) mouler ladite composition de résine de moulage pour obtenir ledit produit moulé.

2. Composition de résine pour une utilisation dans le procédé de la revendication 1, laquelle comprend
(i) 80 à 95 % en poids d'une résine de matrice et
(ii) 5 à 20 % en poids de fibres cellulosiques courtes teintées au colorant de cuve avec au moins un colorant à base de thrène dans une quantité d'au moins 7 % en poids basée sur lesdites fibres cellulosiques courtes.

3. Composition de résine selon la revendication 2, dans laquelle lesdites fibres cellulosiques courtes sont choisies parmi le groupe constitué de fibres de rayonne viscose courtes et de fibres de coton courtes.

4. Composition de résine selon la revendication 2 ou 3, dans laquelle lesdites fibres cellulosiques courtes présentent une finesse de 1,1 à 220 dtex (décitex) et une longueur de 0,1 à 3 mm.

5. Composition de résine selon l'une quelconque des revendications 2 à 4, dans laquelle ladite résine de matrice comprend de 15 à 40 % en poids de polypropylène, de 15 à 40 % en poids de polyéthylène, de 10 à 30 % en poids d'un élastomère d'éthylène-propylène, et de 1 à 10 % en poids de polypropylène modifié par des acides.

6. Composition de résine selon l'une quelconque des revendications 2 à 5, dans laquelle ledit colorant à base de thrène est choisi parmi le groupe constitué de C.I. Rouge de cuve 10, C.I. Bleu de cuve 14, C.I. Brun de cuve 1, C.I. Orange de cuve 2, C.I. Vert de cuve 1, C.I. Jaune de cuve 22, C.I. Violet de cuve 1, C.I. Jaune de cuve 48 et C.I. Noir de cuve.

7. Composition de résine selon l'une quelconque des revendications 2 à 6, dans laquelle lesdites fibres cellulosiques courtes sont teintées au colorant de cuve en utilisant ledit colorant à base de thrène dans une quantité de 7 à 15 % en poids basée sur lesdites fibres cellulosiques courtes.

8. Utilisation d'une composition de résine selon l'une quelconque des revendications 2 à 7 en tant que mélange maître.

9. Composition de résine de moulage pour une utilisation dans le procédé de la revendication 1, laquelle comprend
(A) une composition de résine selon l'une quelconque des revendications 2 à 8 et
(B) une résine non colorée exempte de fibres cellulosiques courtes teintées.

10. Composition de résine de moulage selon la revendication 9, dans laquelle ladite résine non colorée est du polypropylène.

11. Produit moulé dont une surface présente un aspect extérieur analogue à un non-tissé, ledit produit moulé pouvant être obtenu par le procédé selon la revendication 1.
